# EUROPEAN PATENT APPLICATION

(11) **EP 3 357 642 A1**
(43) Date of publication of application: **08.08.2018**
(21) Application number: 16851053.5
(22) Date of filing: 06.09.2016
(51) Int. Cl.: B24D 11/00, B23D 61/18, B24D 3/00, B24D 3/06

(54) **ABRASIVE DIAMOND GRAIN FOR WIRE TOOL AND WIRE TOOL**

(30) Priority: 30.09.2015 JP 2015193554
(71) Applicant: Furukawa Electric Co. Ltd., Tokyo 100-8322 (JP)
(72) Inventor: TANAKA, Naoki, Tokyo 100-8322 (JP); MATSUNAGA, Yoshinori, Tokyo 100-8322 (JP); KUBOTA, Tetsuji, Tokyo 100-8322 (JP)
(74) Representative: Goddar, Heinz J.
(86) International application number: PCT/JP2016/076188
(87) International publication number: WO 2017/056877

(57) **Abstract**

Before bonding abrasive grain (13) to a core wire (11), a palladium coating (17) is applied to the surface of the abrasive grain (13). The palladium coating (17) is formed as a sea on the surface of the diamond grains (14). In other words, the palladium coating (17) covers the surface of the diamond grains (14) so that the entirety thereof is continuous. Moreover, the palladium coating (17) does not completely cover the diamond grains (14), and a diamond exposed portion (18) is provided by the palladium coating (17) not being applied on a portion thereof. The exposed diamond portion (18) is formed as an island on the surface of the abrasive grain (13). In other words, a plurality of diamond exposed portions (18) are formed as islands separated from each other.

## Description

### TECHNICAL FIELD OF THE INVENTION

The present invention relates to abrasive diamond grains, surfaces of which are coated with optimally conditioned palladium, for wire tools that can cut hard-brittle materials such as silicon and sapphire, and a wire tool.

### BACKGROUND OF THE INVENTION

For cutting hard-brittle materials such as glass, ceramics, quartz, sapphire, or silicon, wire tools have been conventionally used. For example, there has been a method called loose abrasive processes for slicing a machining target using a steel wire while supplying slurry containing abrasive grains. However, such a method generates a large amount of cutting-waste liquid containing abrasive grains and cutting wastes from the machining target. Accordingly, this needs to be disposed, which raises an issue of environmental impacts.

In contrast to the slurry process, there are fixed abrasive processes using wire tools in which abrasive diamond grains are held by resin or plating to an outer periphery portion of a wire such as a piano wire. In particular, wire tools in which abrasive diamond grains are held by plating have been widely used in recent years for high fixing strength of the abrasive diamond grains. In most of these wire tools, a plating layer covers abrasive diamond grains, and, to fix the abrasive diamond grains firmly, the abrasive diamond grains the surfaces of which are coated with a metal such as nickel or titanium are used (Patent Document 1, Patent Document 2).

Also, to avoid losing original sharpness of abrasive diamond grains, a wire tool in which conductive particles are scattered in spots on the surfaces of the abrasive diamond grains and the abrasive diamond grains are then fixed by plating with some of the abrasive diamond grains being exposed is used (Patent Document 3).

Furthermore, there is a wire tool including a high-strength electric conductive core wire, abrasive diamond grains provided on an outer periphery of the core wire, and a plating layer formed on the outer periphery of the core wire for holding the abrasive diamond grains, in which metal cores are scattered on surfaces of the abrasive diamond grains and, in regard to a radial direction of the core wire, a thickness of the plating layer at a tip end part of the abrasive diamond grain is smaller than a thickness of the plating layer on the surface of parts of the core wire other than the abrasive diamond grains (Patent Document 4).

### RELATED ART

### PATENT DOCUMENTS

[Patent Document 1] Japanese Patent No. 4724779
[Patent Document 2] Japanese Patent No. 4139810
[Patent Document 3] Japanese Patent No. 5066508
[Patent Document 4] Japanese Patent No. 5705813

### SUMMARY OF THE INVENTION

### (PROBLEMS TO BE SOLVED BY THE INVENTION)

However, when abrasive diamond grains coated with nickel as in Patent Document 1 are used, in adhering the abrasive diamond grains to a core wire, electric field is concentrated onto convex parts. This may cause the abrasive diamond grains to easily adhere and laminate over already adhered abrasive diamond grains, and it is likely that the abrasive diamond grains are piled up onto each other and cohered. When the abrasive diamond grains are piled up in this way, a line diameter in a longitudinal direction of the wire tool becomes ununiform. As a result, a thickness of a wafer cut out from an ingot using such a wire tool varies within the wafer, which creates a problem of damaging the wafer surface with scratches.

Moreover, when plating process is carried out to fix the diamond after adhering the abrasive diamond grains to the surface of the electric conductive core wire, the electric field is similarly concentrated onto the convex parts. This causes a problem that the thickness of the plating layer over the abrasive diamond grains is larger than the thickness of the plating layer over the core wire. The thicker the plating layer over the abrasive diamond grains, the more time needed for exposing blades of the abrasive diamond grains contributing to the process, and this leads to bad sharpness at the beginning of cutting, variation in thickness of each wafer, and warp of the wafer.

On the other hand, to obtain good sharpness from the beginning, there is a method in which a plating layer over abrasive diamond grains is removed by dressing using grindstones such as alumina. However, too much dressing may cause the abrasive diamond grains to fall off during the dressing, or may reduce the fixing strength for the abrasive diamond grains.

Also, when abrasive diamond grains coated with titanium are used as in Patent Document 2, adhesiveness between the titanium on the surfaces of the abrasive diamond grains and the plating is bad and the abrasive diamond grains may fall off during the machining process.

Also, in Patent Document 3, abrasive grains are only embedded in the plating layer so the fixing strength for the abrasive grains is insufficient, which leads to a problem of falling off of the abrasive diamond grains. If the abrasive grains fall off, the diameter of the wire tool changes and this may leads to variation in the thickness of the wafer as well as generating warps.

Also, in Patent Document 4, electric current flows preferentially through only the parts of the abrasive grain surfaces where metal cores are coated in spots. Thus, as a whole, the electric current does not flow smoothly when electrified, leading to large variation in electric current electrified on the surfaces of the metal cores. As a result, this may generate variation in coating thickness of the plating formed on the metal core surfaces.

As above, in Patent Document 4, since the metal cores are coated as islands, the fixing strength for the abrasive grains to the core wire is insufficient so the abrasive grains are likely to fall off. Thus, there is a serious problem of ageing deterioration in cutting accuracy during use.

The present invention was made in view of such problems. Its object is to provide abrasive diamond grains for wire tools and a wire tool, in which the abrasive diamond grains are securely held and a wafer to be cut can be prevented from thickness variation, warps, and scratches.

### (MEANS FOR SOLVING PROBLEMS)

To achieve the above object, a first invention is an abrasive diamond grain for wire tools including a diamond grain part of a surface of which is coated with palladium. The diamond grain includes a sea portion, in which palladium approximately continuously coats the surface of the diamond grain with a coating thickness of between 0.01 µm and 0.5 µm, and an exposed portion, in which the surface of the diamond grain is not coated with palladium and is exposed. An area ratio of the sea portion to a surface area of the diamond grain is between 70% and 90% and the remaining part is the exposed portion. Palladium may be partially scattered in spots on island-like portions where the surface of the abrasive grain is exposed without the palladium coating.

Here, the sea portion (a sea-like portion) is a part where all are continuous to each other on a surface. On the other hand, the island portion (an island-like portion) is where each is separated from one another on a surface. Thus, in the present invention, the sea portion where palladium is approximately continuously coated means that palladium is approximately continuously formed on a surface of the diamond grain. That is, in the present invention, palladium on any parts is continuous as a sea and all the palladium on any parts of the diamond grain are electrically conductive to each other. Also, the exposed portions, in which the surfaces of the diamond grain are not coated with palladium and are exposed as scattering multiple islands, means that the exposed parts where the surface of the diamond grain are not coated with palladium are formed independently from each other. That is, the individual island-like exposed portions of the diamond grain are formed separated from each other. There may be metal cores partly scattered on the island-like exposed portions of the diamond grain.

Also, the average grain diameter of the diamond used can be appropriately selected according to a type of the hard-brittle material, which is a cutting target. In specific, the average grain diameter of the diamond is preferably between 5 µm and 70 µm and more preferably between 10 µm and 60 µm.

According to the first invention, since most of the surface of the abrasive diamond grain is covered with palladium thinly as a sea, the entire surface of the abrasive diamond grain can be electrically conductive at the time of plating process and thus the abrasive diamond grains can be fixed with sufficient holding power.

Also, the multiple exposed portions, in which part of the surfaces of the diamond grain are not coated with palladium and are exposed as islands, are formed. Thus, when compared to the case in which the entire surface of the abrasive grain is coated, the growth rate of plating on the abrasive diamond grains is slower and thus it is possible to make the thickness of the plating layer at a tip end of the abrasive diamond grain thinner. This means that a very thin palladium film is formed over the surface of the abrasive diamond grain as a sea, and a plurality of the exposed portions where the surfaces of the abrasive diamond grains are exposed exist as islands being separated from each other. For this reason, when the abrasive diamond grains are electroplated to the core wire and the abrasive grains are adhered to the core wire, an electric current does not flow instantly through the overall surface of the abrasive diamond grain but flows only through the sea-like palladium coated portion. Thus, the growth of the plating on the abrasive diamond grains can be properly suppressed and controlled.

Also, since the palladium is formed over the surface continuously as a sea, the same shape of an electric current as the sea portion is formed on the surface of the abrasive diamond grains so the plating over the abrasive diamond grains grows. In contrast, if the entire abrasive diamond grain is coated completely with palladium, an electric field at the time of plating is concentrated onto a convex portion of the abrasive diamond grain and thus a plating thickness on the convex portion of the abrasive diamond grain is thicker than a plating thickness on the core wire. With the palladium metal cores coating the surface of the abrasive diamond grain in a sea form as above, it is possible to uniformly form a thinner plating on the tip of the abrasive diamond grain than the plating on the core wire.

Also, by using the above-mentioned abrasive diamond grains for a wire tool, the wire tool can have a good sharpness from the beginning and fully demonstrate its cutting ability right after the beginning of cutting. As a result, the qualities of cut wafers are improved. Furthermore, when the abrasive diamond grains are adhered to the wire, the plating layer is not formed at once to cover the entire abrasive grain. Thus, other abrasive diamond grains are not attracted thereto and cohesion of abrasive grains does not occur. This allows the wire tool to have a uniform outer diameter and thus the qualities of the cut wafers are improved.

Also, since adhesiveness between the palladium and the plating is high and strongly fixing, it is possible to prevent the abrasive diamond grains from falling off. Also, although nickel or titanium forms a passive film on the surface and thus has a weak adhesiveness with the plating for fixing the abrasive diamond grains, palladium does not passivate so the adhesiveness thereof with the plating is good and falling off of the abrasive grains at the time of machining can be prevented.

A second invention is a wire tool including the abrasive diamond grains according to the first invention, a core wire having electric conductivity, and a plating layer, which is formed on an outer periphery of the core wire, for holding the abrasive diamond grain. The plating layer includes a core-wire plating layer covering a surface of the core wire and an abrasive-grain plating layer covering a surface of the abrasive diamond grain. A ratio of an average thickness of the abrasive-grain plating layer on the surface of the abrasive diamond grain of a part protruding from the core-wire plating layer to an average thickness of the core-wire plating layer is between 0.2 and 0.8.

Alternatively, the second invention may be a wire tool including the abrasive diamond grains according to the first invention, a core wire having electric conductivity, and a plating layer, which is formed on an outer periphery of the core wire, for holding the abrasive diamond grain. The plating layer includes a core-wire plating layer covering a surface of the core wire and an abrasive-grain plating layer covering a surface of the abrasive diamond grain. A part of the abrasive-grain plating layer at a tip end of the abrasive diamond grain is removed and a part of the tip end of at least some of the abrasive diamond grains is exposed.

The diameter of the abrasive diamond grains used for the wire tool varies depending on the purpose. Thus, it is necessary for the abrasive diamond grains in various sizes to keep the holding power for the abrasive grains and the surface qualities of the cutting target after cutting. For this reason, there are predetermined constraints on a relation between the plating thickness and the abrasive diamond grain size. For example, it is preferable that an average thickness of the core-wire plating layer is between 0.25 and 0.75 times an average grain diameter of the abrasive diamond grains.

Here, the thickness of the core-wire plating layer at the part where the abrasive diamond grain is fixed forms a base portion of the plating layer into which a lower part of the abrasive diamond grain is embedded with a predetermined depth. Furthermore, the plating layer that is continuous from this base portion is formed over the surface of the abrasive diamond grain, which is then held in this state. Thus, the average thickness of the core-wire plating layer becomes a basis for the fixing strength for the abrasive diamond grains. However, to gain a stable fixing strength that can resist shearing stress applied to the abrasive diamond grains during cutting, the core-wire plating thickness of 0.25 times the average grain diameter of the abrasive diamond grains is required. If the core-wire plating thickness is smaller than this thickness, the abrasive diamond grains tend to fall off easily. If a base portion thickness E is over 0.75 times the average grain diameter, an amount of protrusion of the abrasive grain becomes small, which may cause a slide, and the sharpness deteriorates as the amount of protrusion of the abrasive grain decreases with the progress of machining process.

The surface of the core wire may have a strike plating layer. The strike plating layer may be formed of nickel or an alloy thereof. Having a strike plating layer enables the abrasive diamond grains to adhere easily to the core wire.

In the second invention, the effects of the abrasive diamond grains are remarkable when a palladium coating rate is between 70% and 90%. Also, by making the ratio of the average thickness of the abrasive-grain plating layer formed on a part of the surface of the abrasive diamond grain protruding from the core-wire plating layer, which is a plating layer on the surface of the core wire, to the average thickness of the core-wire plating layer is between 0.2 and 0.8, both the high holding power for the abrasive diamond grains in the wire tool and improved qualities of cut wafers can be efficiently established.

Also, dressing can be performed to the wire tool to expose part of the tips of more than 90% of the abrasive diamond grains so that the wire tool can fully demonstrate its cutting ability right after the beginning of cutting. Also, at this time, since the plating thickness on the surface of the abrasive diamond grains is thin, the time for dressing using a grindstone is short and strong dressing is unnecessary. Thus, falling off or decline in fixing strength of the abrasive diamond grains can be prevented and thus the productivity can be improved.

Also, setting the average thickness of the core-wire plating layer 0.25 times the average grain diameter of the abrasive diamond grains or more can ensure the holding power for the abrasive diamond grains, and setting the average thickness of the core-wire plating layer 0.75 times the average grain diameter of the abrasive diamond grains or less can ensure the cutting qualities of the abrasive diamond grains in the wire tool.

Furthermore, by forming the strike plating layer on the surface of the core wire, an electric current that flows through the core wire surface when the abrasive diamond grains are electroplated becomes stable, allowing to stably adhere the abrasive diamond grains. Also, roughening the core wire surface or the strike plating surface can improve the adhesiveness of the plating layer due to anchoring effect.

### (EFFECTS OF THE INVENTION)

The present invention can provide abrasive diamond grains for wire tools and a wire tool, in which the abrasive diamond grains are securely held and a wafer to be cut can be prevented from thickness variation, warps, and scratches.

### BRIEF DESCRIPTION OF DRAWINGS

FIG. 1 illustrates a cutting device 1.
FIG. 2 is a cross sectional view of a wire tool 7.
FIG. 3 is an enlarged cross sectional view of an abrasive grain 13.
FIG. 4A illustrates a diamond grain 14.
FIG. 4B is a view showing a state where a palladium coating 17 is provided in a sea form on an outer periphery surface of the abrasive grain 13.
FIG. 4C is a view showing a state where a palladium coating 17 is provided in an island form on an outer periphery surface of the abrasive grain 13.
FIG. 5 is a schematic view showing a wire-tool manufacturing device 20.
FIG. 6 illustrates a method for measuring TTV (TV5).

### DESCRIPTION OF SOME EMBODIMENTS

### (Cutting Device)

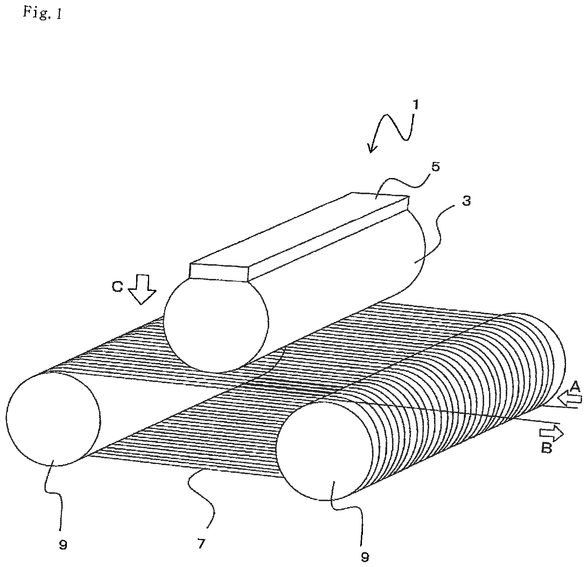

Hereinafter, an embodiment of the present invention will be described with reference to the accompanying drawings. FIG. 1 is a schematic view showing a cutting device 1. The cutting device 1 is for slice machining an ingot 3, which is a machining target. The cutting device 1 includes a holder 5 for holding the ingot 3, rollers 9 with multiple grooves for moving the wire tool 7, a motor, an illustration of which is omitted, for driving the holder 5 and the rollers 9, and so on.

In the cutting device 1, the wire tool 7 is wound around a periphery of the rollers 9 multiple times while being applied with a predetermined tension. The wire tool 7 is fed from one side (in a direction of an arrow A in the drawing) and wound up at the other side (in a direction of an arrow B in the drawing). Reversible rotation of the rollers 9 by the driving motor enables the wire tool 7 to move back and forth between the rollers 9.

The ingot 3, which is a hard-brittle material such as silicon or sapphire, is held by the holder 5 and moved in a direction that is vertical to a moving direction of the wire tool 7 (in a direction of an arrow C in the drawing). When a predetermined load is applied onto the holder 5 and the ingot 3 comes in contact with the wire tool 7, the wire tool 7 cuts the ingot 3. That is, the ingot 3 can be machined and cut into multiple slices at one time. The cutting method in the present invention is not limited to the illustrated example and may be applied to all cutting processes using wire tools according to the present invention.

### (Wire Tool)

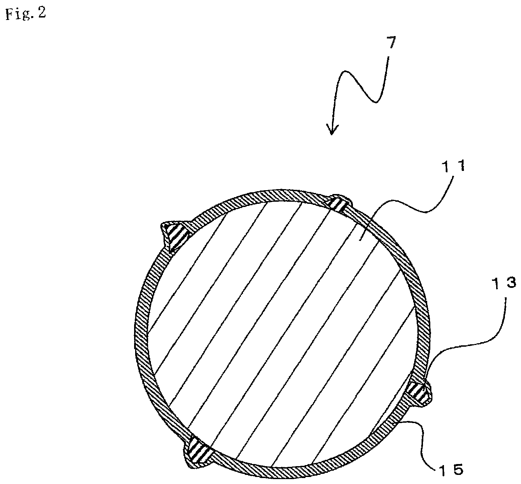

Next, the wire tool 7 will be described. FIG. 2 is a cross sectional view of the wire tool 7 in a direction vertical to an axis direction thereof. The wire tool 7 mainly includes a core wire 11, abrasive grains 13, a plating layer 15, and so on.

### (Core Wire)

The core wire 11 is a high-strength metal wire having electric conductivity. As the core wire 11, a wire such as a piano wire, a stainless steel wire, a tungsten wire, or a molybdenum wire may be used. A non-metallic wire formed with an electric conductive coating layer, such as glass fiber, aramid fiber, carbon fiber, alumina fiber, and boron fiber, may also be applicable for the core wire 11.

In the present invention, strike plating can be formed on a surface of the core wire 11. A metal used for a strike plating layer can be chosen from metals like nickel, copper, and brass that are compatible with the subsequent nickel plating. Strike plating serves as a foundation plating and has an effect of stable and uniform electroplating of the abrasive diamond grains.

If a non-metal wire is used as the core wire here, to give electric conductivity to an outer peripheral surface of the core wire, glass fiber or high-polymer fiber can be plated with a metal by non-electroplating to form a surface electric conductive layer on the core wire. Alternatively, electric conductivity can be applied by using electric conductive high polymer for the outer peripheral surface of the core wire or mixing or scattering electric conductive material such as silver into the high polymer.

An outer diameter of the core wire 11 is preferably between 80 µm and 300 µm. This is because, if the outer diameter of the core wire 11 is too small, tensile strength of the core wire 11 decreases and may break when used; on the other hand, if the outer diameter of the core wire 11 is too large, an amount of kerf loss increases and a yielding rate at the time of cutting decreases.

### (Abrasive Grain 13)

The abrasive grains 13 are fixed onto an outer periphery of the core wire 11. The abrasive grain 13 is an abrasive diamond grain. That is, the abrasive grain 13 is an abrasive diamond grain for wire tools. An average grain diameter of the abrasive grain 13 is preferably between 5 µm and 70 µm, and more preferably between 10 µm and 60 µm. This is because, if the grain diameter of the abrasive grain 13 is too small, the cutting ability is impaired. Also, if the grain diameter of the abrasive grain 13 is too large, it is necessary to increase the thickness of the layer for holding abrasive grains to hold large grains so an outer diameter of the wire tool 7 is increased, which reduces the yielding rate.

The average grain diameter of the abrasive grain 13 in the present invention is an average grain diameter (an arithmetical mean grain diameter) of a distribution measured by a commonly used laser diffraction measurement device for grain diameter distribution (SALD-2300 by Shimazu Co., for example). Also, surface properties of the abrasive grain 13 will be described in details later.

### (Plating Layer 15)

The plating layer 15 is formed on the outer periphery of the core wire 11 and serves as a holding layer for the abrasive grains 13. For the plating layer 15, any metals that can hold the abrasive grains 13 can be used. However, plating of nickel or an alloy of nickel is most preferable. A thickness of the plating layer 15 is determined according to the average grain diameter of the abrasive grains 13. The plating layer 15 includes a core-wire plating layer covering the surface of the core wire 11 and an abrasive-grain plating layer covering the surface of the abrasive grain 13.

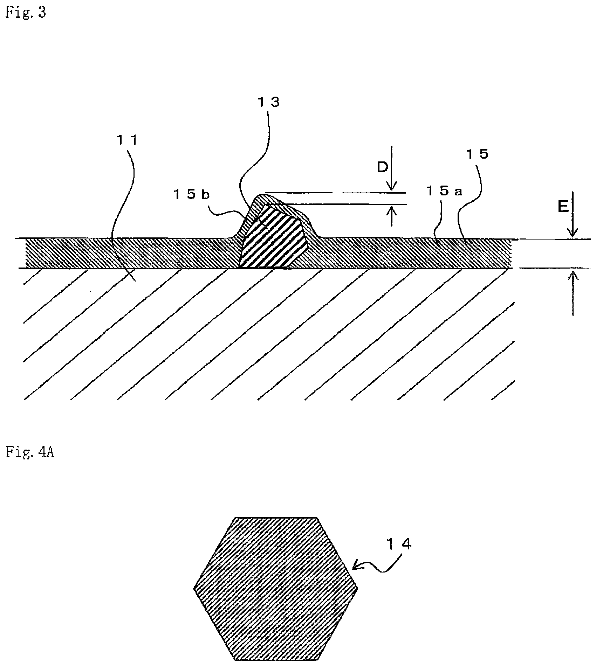

FIG. 3 is an enlarged cross sectional view of the abrasive grain 13. An average thickness E of a base portion (a core-wire plating layer 15a) of the plating layer 15 on surface parts of the core wire 11 other than the abrasive grain 13 is preferably between 0.25 and 0.75 times the average grain diameter of the abrasive grains 13. Here, the average thickness of the core-wire plating layer 15a forms the base portion for the plating layer in which a lower part of the abrasive diamond grain is embedded to a predetermined depth when the abrasive diamond grains are fixed. If the thickness E of the core-wire plating layer 15a is smaller than 0.25 times the average grain diameter of the abrasive grains 13, the abrasive grains 13 cannot be held sufficiently and may fall off due to shearing force during the machining process. Also, if the thickness E of the core-wire plating layer 15a is larger than 0.75 times the average grain diameter of the abrasive grains 13, the abrasive grains 13 can be held firmly. However, in this case, a slide is likely to occur at the beginning of the process and, as the process proceeds, an amount of protrusion of the abrasive grains 13 decreases and the sharpness deteriorates, possibly causing a warp in the wafer.

Also, a ratio of a thickness D of the plating layer 15 (an abrasive-grain plating layer 15b) formed on part of a surface of the abrasive grain 13 protruding from the plating layer 15 (the core-wire plating layer 15a) on the surface of the core wire 11 to the above-mentioned thickness E of the core-wire plating layer 15a is preferably between 0.2 and 0.8. This is because, if the thickness D of the abrasive-grain plating layer is larger than 0.8 times the thickness E of the core-wire plating layer 15a, the sharpness of the wire tool 7 at the beginning deteriorates. This may cause variation in thickness of the cut wafer. Moreover, if dressing is to be carried out to the wire tool 7 in advance, the thicker the plating layer 15 on the surface of the abrasive grains 13, the more time is required for dressing. Also, if the thickness D of the abrasive-grain plating layer 15b is smaller than 0.2 times the thickness E of the core-wire plating layer 15a, the plating layer 15 over the abrasive grains 13 becomes too thin and fixing of the abrasive grains 13 may not be sufficient.

When dressing is carried out to the wire tool 7 in advance, it is preferable to remove part of the abrasive-grain plating layer at a tip part of the abrasive grain 13 and to expose the tip parts of at least part of the abrasive grains 13 (preferably, 90 % or more of the abrasive grains 13). In this way, the cutting ability of the wire tool can be fully demonstrated from the beginning of its use. The exposure of the tips of the abrasive grains 13 is verified by observing the predetermined area under an electron microscope (SEM) + elemental analysis and counting the number of the exposure.

The thickness of the plating layer 15 can be measured by observing the cross section of the wire tool 7 and taking the average from the results obtained from measuring a plurality of cross sections (for example, n = 10).

### (Surface Properties of the abrasive grain 13)

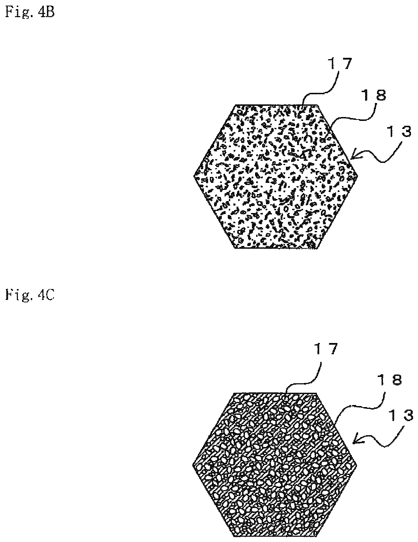

FIG. 4A to FIG. 4C are schematic views of the abrasive grain 13; FIG. 4A illustrates a diamond grain 14 before processing, FIG. 4B is a view showing a state where a palladium coating 17 is provided in a sea form on an outer periphery surface of the abrasive grain 13, and FIG. 4C is a view showing a state where a palladium coating 17 is provided in an island form on an outer periphery surface of the abrasive grain 13. Before adhering the abrasive grains 13 to the core wire 11, a palladium coating 17 is applied to the surface of the abrasive grain 13. Although nickel or titanium may be used for the metal film to be formed on the surface of the abrasive diamond grain, nickel or titanium forms a passive film on the surface, which may deteriorate adhesiveness with the plating layer 15, and the holding power for the abrasive grains 13 may become insufficient. In contrast, palladium does not form a passive form and thus has good adhesiveness to nickel plating. Thus, a palladium coating is preferable as a foundation coating for the diamond grain.

In the present invention, as shown in FIG. 4B, the palladium coating 17 is formed on the surface of the diamond grain 14 in a sea form. That is, part of the surface of the diamond grain 14 of the abrasive grain 13 is coated with the palladium coating 17 and the entirety of the palladium coating 17 is approximately continuous (a sea portion). Also, the palladium coating 17 does not completely covers the diamond grain 14 and there are diamond exposed portions 18 where the diamond grain 14 is exposed without the palladium coating 17. The diamond exposed portions 18 are formed as islands on the surface of the abrasive grain 13. That is, a plurality of the diamond exposed portions 18 are formed as islands separated from each other. As above, the abrasive grain 13 includes the sea portion, in which approximately continuous palladium coating covers the surface of the diamond grain 14, and the diamond exposed portions 18, in which the surface of the diamond grain 14 is exposed without the palladium coating.

On the other hand, FIG. 4C illustrates a conventional example in which the palladium coatings 17 are formed as islands on the surface of the diamond grain 14. That is, the palladium coatings 17 coat the surface of the diamond grain 14 while being separated from each other. That is, the palladium coatings 17 are discontinuous to each other. Thus, the diamond exposed portions 18 are formed as a sea. This island-like form of palladium coating had been considered as a preferable coating form of the palladium coating 17.

The inventors of the present invention paid attention to the coating form (deposition form) of palladium metal particles on the surface of the abrasive diamond grain and have attained the present invention by changing the coating form from the island form to the sea form. To be more specific, the inventors found that, instead of using conventional abrasive diamond grains with palladium metal cores distributed as islands, making the coating form of palladium metal cores on the abrasive diamond grain a sea-like continuous structure can improve the electric conductivity between the core wire and the abrasive diamond grains when fixed by plating. This enables to form a thin film plating layer onto the abrasive diamond grains, and, consequently, surface properties of the cut work piece and the holding power for the abrasive grains are remarkably improved even with a thin film plating layer.

As above, forming the sea-like the palladium coating 17 on the surface of the diamond grain 14 enables to provide a wire tool or the like that excels in holding the abrasive diamond grains, that can fully demonstrate sharpness from the beginning of cutting, and that cuts wafers with a little variation in thickness, excelling in warps and surface qualities thereof while suppressing scratches generated thereon. In particular, by using palladium metal cores, the present invention has achieved to maintain the cutting ability of the wire tools while maintaining the fixing strength without increasing the plating thickness.

Preferably, a coating ratio (area ratio) of the palladium coating 17 (the sea portion) on the abrasive grain 13 is between 70% and 90% of a surface area of the diamond grain and the remaining parts are the diamond exposed portions 18. If the palladium coating ratio is too low, a growth rate of the plating layer 15 on the surface of the abrasive grain 13 becomes too small, which leads to a bad productivity in the plating process and makes it difficult for the plating layer 15 to sufficiently hold the abrasive grains 13. Also, if the palladium coating ratio is too high, the thickness of the plating layer 15 on the surface of the abrasive grain 13 becomes too large, which deteriorates the sharpness of the wire tool 7 at the beginning.

Also, an average thickness of coating thickness of the palladium coating 17 formed on the surface of the diamond grain 14 is preferably between 0.01 µm and 0.5 µm. This is because, if the average thickness of the palladium coating 17 is less than 0.01 µm, an amount of palladium on the surface of the abrasive grain 13 is not enough, which makes it hard for plating to grow on the abrasive grain 13, weakens the adhesiveness with the nickel plating, and may cause the abrasive grain 13 to fall off during the process. As a result, the quality of the wafer surface may be deteriorated. Also, if the average thickness of the palladium coating 17 exceeds 0.5 µm, the plating over the abrasive grain 13 is thickly formed and sharpness at the beginning cannot be demonstrated. This may cause variation in thickness of the wafers or sliding at the beginning of cutting. Moreover, since palladium is a precious metal, this is disadvantageous in respect of cost.

### (A method for forming a palladium metal core coating onto a surface of an abrasive grain)

Following is an example of a method for forming the palladium coating 17 on the surface of the abrasive grain.

### Conditioner Process:

First, an electric potential of the surface of the diamond grain 14 is adjusted and positive charges are applied thereto. In specific, a commonly used cationic surface active agent such as an amine salt compound is used to process the surface.

### Activator Process:

Next, palladium particles (compound) are adsorbed to the surface of the diamond grains 14. As the palladium compound, commonly known water-soluble palladium compounds such as palladium chloride, palladium nitrate, palladium, sulphate, palladium acetate, or palladium oxide can be used. At this time, the palladium metallic compounds are innumerably adsorbed to the surface of the diamond grains 14 by repeating the conditioner process and the activator process under predetermined conditions, which will be described below. As these processes are repeated or concentration of the palladium in the treatment liquid increases, the amount of adsorbed palladium increases and the coating form of palladium metal cores on the surface of the abrasive diamond grains grows into an island form.

### Accelerator Process:

Finally, the adsorbed palladium cores are grown in a direction so as to form a metal film. In specific, a reduction treatment is carried out. In this process, a reduction treatment is carried out to the palladium compounds adsorbed in the activator process so that the palladium metal cores form a structure in which the palladium metal cores are arranged continuously with each other. This makes it easier to form palladium in a sea-like form. The coating ratio can be adjusted by adjusting the processing time. Also, the thickness of the film can be adjusted by changing the processing temperature and adjusting the speed of the reduction reaction: the thickness of the film increases as the reaction speed increases.

Here, the average thickness of the palladium coating 17 is a mean thickness calculated from an amount of palladium used in the process for applying palladium and a surface area of the diamond grain 14 assuming that the diamond grain 14 is a sphere. Also, the thickness D of the plating layer 15 on the abrasive grain 13 shown in FIG. 3 is the thickness of the plating layer 15 over the palladium coating 17.

Repeating the conditioner process and the activator process a certain number of times can grow the palladium coating 17 and coat the surface of the abrasive grain as islands. Here, the reason for repeating the conditioner process and the activator process predetermined number of times is that, if the conditioner process and the activator process are not repeated the predetermined number of times, variation in the coating form of the parts to be coated as islands may occur and this makes it difficult to coat the diamond surface uniformly. Also, by repeating the processes the predetermined number of times, the coating ratio of the above-mentioned island-like coated parts can be improved.

To form the palladium coatings 17 into islands, the accelerator process should be carried out under predetermined conditions after repeating the conditioner process and the activator process. Thus, the palladium coatings 17 formed in this way are formed as islands on the surface of the diamond grain 14. That is, it is possible to form palladium on the surface of the diamond grain 14 with the coating ratio between 50% and 70% by appropriately changing the number of repetition of the conditioner process and the activator process and the time.

In the present invention, the palladium coating 17 can be easily grown from the low coating ratio into a sea form by adjusting the temperature and the time for the accelerator process without repeating the conditioner process and the activator process. In specific, the reduction of the palladium compound is performed for a long time at a lower temperature than a normal treatment temperature so as to delay the progress of reduction reaction of the palladium. This can grow the palladium into a sea form on the diamond surface and, by further raising the coating ratio thereof, the palladium can coat the diamond surface in the sea form as deposition. Adjusting the above conditions enables to adjust the coating ratio of the palladium.

Also, it is possible to obtain a different palladium coating thickness at the predetermined coating ratio by adjusting the temperature for the accelerator process. As the temperature for the accelerator process increases, its reaction speed increases so does the growth rate of the film in a thickness direction. Thus, if required, a larger thickness can be obtained by raising the treatment temperature.

### (Method for manufacturing a wire tool)

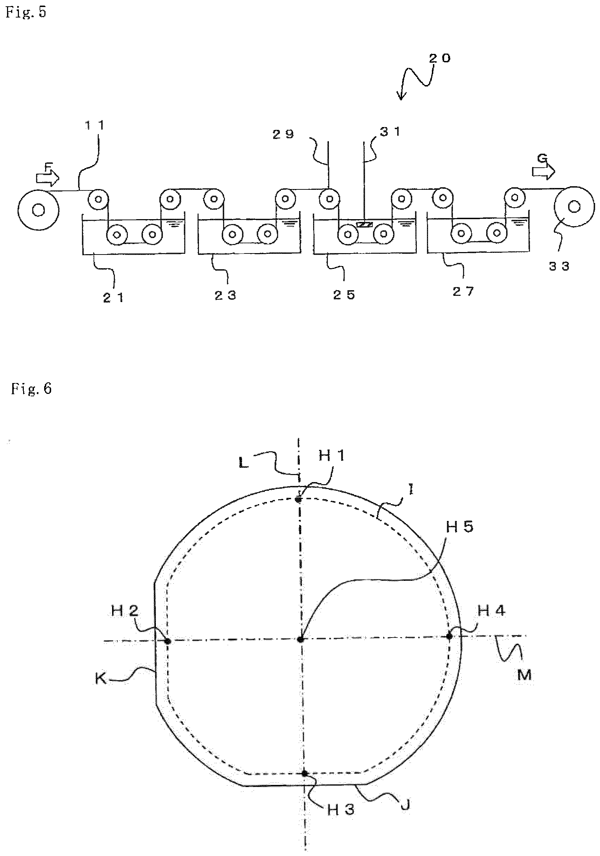

Next, a process for manufacturing the wire tool 7 will be described. FIG. 5 is a schematic view showing a wire-tool manufacturing device 20. First, the core wire 11 is manufactured. The core wire 11 can be used as it is if a metal wire such as a piano wire is used. Or, if a non-metal wire such as glass fiber is used, an electrically conductive coating layer is provided around an outer periphery surface thereof beforehand. When using a piano wire, as mentioned above, it is also preferable to form copper plating or the like on the outer periphery surface thereof.

Next, the core wire 11 is fed to a degreasing tank 21 (in a direction of an arrow F in the drawing). The degreasing tank 21 is a tank containing a sodium hydroxide solution, for example, where impurities such as oil adhering to the outer surface of the core wire 11 are removed. In a water-washing tank 23, chemical solutions or the like of the degreasing tank 21 adhered to the surface are removed.

A plating tank 25 is for electroplating the core wire 11 and electrodepositing the abrasive grains 13 thereto. The plating tank 25 is a nickel bath of a dissolved nickel solution with scattered abrasive grains 13, for example. Here, for the plating tank, an electroplating bath with an acidity adjusted to PH 4.0 using 300 g/l of nickel sulfamate, 5 g/l of nickel chloride, and 40 g/l of boric acid can be used, for example.

As mentioned above, the palladium coating 17 is formed on the surface of the abrasive grains 13 beforehand. A cathode 29 is connected to the core wire 11 passing through the plating tank 25. Also, an anode 31 is immersed in the plating tank 25. The cathode 29 and the anode 31 are connected to a power supply, the illustration of which is omitted. In this way, the plating layer 15 with a desired thickness is formed.

With the abrasive grains 13 being held by the plating layer 15, excessive treatment liquid and the like are rinsed off in a water-washing tank 27 and the wire tool 7 is manufactured being wound up by a winding-up device 33 (in a direction of an arrow G in the drawing).

As described above, according to the present embodiment, metal plating is used as an abrasive grain holding means for fixing the abrasive grains 13 to the core wire 11 so the abrasive grains 13 can be firmly held. At this time, the palladium coating 17 is formed on the surface of the abrasive grain 13 as a sea and this can make the thickness of the plating layer 15 on the surface of the abrasive grain 13 (the tip part) less than the thickness of the plating layer 15 on the surface of the core wire 11 with the predetermined ratio. Thus, the wire tool 7 can fully demonstrate its cutting ability right after the beginning of its use.

Also, because the palladium coating 17 is formed as a sea, for the palladium coated part on the surface of the abrasive grain 13, stable electric conduction is obtained from the core wire 11 to the sea-like palladium coating 17 on the surface of the abrasive grain 13. As a result, the plating layer 15 can be formed on the surface of the abrasive grain 13 at an approximately uniform speed. Thus, even if the thickness of the plating layer 15 holding the abrasive grains 13 is thin, a plating layer with an approximately uniform thickness can be formed to securely hold the abrasive grains 13. In particular, the palladium coating 17 excels in adhesiveness with nickel plating and thus the plating layer 15 can securely hold the abrasive grains 13.

Also, the area ratio of the sea portion, which is the palladium coating 17, is between 70% and 90% and this enables to keep both strong holding power thereof for the abrasive grains 13 and good qualities of the cut wafers. Also, the thickness of the palladium coating 17 is between 0.01 µm and 0.5 µm and this enables to keep both improved adhesiveness with the plating layer 15 and good qualities of the cut wafers.

Also, holding power is insufficient if the thickness of the plating layer 15 on the surface of the core wire 11 is less than quarter of the average grain diameter of the abrasive grains 13. However, in the present invention, the thickness of the plating layer 15 on the surface of the core wire 11 is equal to or more than quarter of the average grain diameter of the abrasive grain 13 and thus sufficient holding power for the abrasive grains 13 can be obtained. This can prevent the abrasive grains 13 from falling off during cutting. Also, since the thickness of the plating layer 15 is equal to or less than three quarters of the average grain diameter of the abrasive grains 13, the plating layer 15 never becomes too thick. This can ensure that there is a protrusion margin of the abrasive grain 13 protruding from the plating layer 15. Thus, the tool life can be secured. It is also unnecessary to excessively increase the thickness of the plating layer 15 so the productivity is good.

Also, since the ratio of the thickness of the plating layer 15 formed on parts of the abrasive grain 13 protruding from the core-wire plating layer (the abrasive-grain plating layer) to the thickness of the plating layer 15 on the surface parts of the core wire 11 other than the abrasive grains 13 (the core-wire plating layer) is 0.2 or more, sufficient holding power for the abrasive grains 13 can be obtained. Also, since the ratio of the thickness of the abrasive-grain plating layer to the thickness of the core-wire plating layer is 0.8 or less, the cutting ability can be fully demonstrated at the beginning of use and the process time can be shortened even if dressing is performed.

### (WORKING EXAMPLES)

Various wire tools are manufactured by changing a surface form of abrasive diamond grains, plating thickness, and so on. The qualities and the like of wafers sliced with these tools are evaluated.

### (Working Example 1)

A wire tool according to the present invention is manufactured as below. Abrasive diamond grains are fixed with a nickel plating to a piano wire that has a diameter of 180 µm and is coated with approximately 1 µm copper plating. A nickel sulfamate bath is used for the nickel plating. For the abrasive diamond grains, ones with the average grain diameter of 35.2 µm are used.

The abrasive diamond grains can be obtained by combining three standard processes of a conditioner process in which diamond grains are processed using a cationic conditioner for 20 minutes at 50 °C, for example, an activator process in which the diamond grains are immersed in a solution of dissolved palladium compounds for 20 minutes at 50 °C, and a subsequent accelerator process in which the diamond grains are immersed in a solution of dissolved palladium compounds containing reducing agent at a predetermined temperature for a predetermined time. By setting these three processes, the number of times of the process, processing time, and the like, palladium coating can be formed on the surface of the diamond in various forms, such as an island-like coating forms with the coating ratios between 50% and 70%, sea-like coating forms with the coating ratios between 50% and 90%, and an entirely coated form with the coating ratio of 100%.

For example, the island-like form is obtained by repeating the above-mentioned conditioner process and the activator process with the number of process and the processing time appropriately changed and then performing the accelerator process for 20 minutes at the predetermined temperature of 50 °C. On the other hand, to obtain the sea-like form on the surface of the abrasive diamond grain, the temperature for the accelerator process is set at a lower temperature and the process time is set to be longer than in the case for obtaining the island-like form; for example, various sea-like forms are obtained by setting the parameters at 40 °C and longer than 60 minutes. For the entire coated form, the processing time is set at the longest time.

Next, positive charges are applied to the diamond surface formed with the palladium coating by using cationic surface active agent again. The abrasive diamond grains generated in this way are added into nickel sulfamate bath formed of nickel sulfamate, nickel chloride, and boric acid so the abrasive diamond grains are taken to the piano wire while being nickel plated and electroplating a predetermined number of abrasive diamond grains. Then, in another nickel sulfamate bath, nickel plating is formed so that the plating thickness on the core wire is 17 µm, and then the diamonds are firmly fixed. Every concentration rate of the abrasive grains (a number of abrasive grains per unit) of all the wire tools concerning the working examples and comparison examples below is constant. Here, a concentration rate of the abrasive grains is an area ratio of the fixed abrasive grains occupying a projected area of the wire surface per predetermined length of the wire. The concentration rate of the abrasive grains is constant so as to equally evaluate each material of the working examples and comparison examples that are provided for the test.

In the present working examples, abrasive grains formed with palladium coating on the surface thereof in sea-like forms, in island-like forms, and in an entirety form are compared. The sea-like palladium coating is formed by using abrasive grains with the palladium coating 17 in the island form and growing the palladium coating further through the conditioner and activator processes that are not repeated and then in the accelerator process at a low temperature with further adjusted processing time (No.1 to No.5 in Table 2). The entirety form of the palladium coating is formed by coating the diamond surface completely with a film in the accelerator process with an extended processing time (No. 6 in Table 2). Also, the island-like palladium coating is formed by growing palladium metal core coating on the surface of the abrasive grains into island forms in the repeated conditioner and activator processes (No. 7 to No. 9 in Table 2).

The palladium coating ratio is as an area ratio calculated from binarized images of palladium mapping on the surface of the abrasive diamond grains. Also, the palladium coating thickness is a mean thickness obtained by calculating an amount of palladium adsorbed to the abrasive grains, which is calculated from the amount of the liquid used by using an atomic absorption method, and then a surface area of the abrasive diamond grain assuming that the abrasive diamond grain is a sphere, and by using the above-mentioned palladium coating ratio.

From the image analysis, the metal core coating structure is a "sea form" if palladium is found to be continuous all over the abrasive diamond grain and in a sea-like coating form; the metal core coating structure is an "island form" if the palladium coating form is found to be as islands and is divided into plurality on the entire surface of the abrasive diamond grain; and the metal core coating structure is an "entirety form" if palladium is found to be completely covering the surface of the abrasive diamond grain.

The core-wire plating thickness is a plating thickness at parts other than the abrasive diamond grains and is measured by observing a cross section of the wire tool. The abrasive-grain plating thickness is also measured in the similar way. The abrasive-grain plating thickness is a thickness of a plating formed on the surface of abrasive grain that is a part protruding from the core-wire plating thickness (i.e. the plating thickness formed over the palladium coating on the abrasive grain).

From the obtained plating thickness of the each part, a ratio of the abrasive-grain plating thickness to the core-wire plating thickness is calculated. A ratio of the core-wire plating thickness to the abrasive-grain diameter is also calculated.

The diameters of the wire tools obtained as above are then measured. As the cutting work piece, a sapphire ingot (with a diameter of 2 inch and a length of approximately 60 mm) is used for slicing experiments. The conditions for cutting are as follows: the wire runs at a speed of 400 m/minute in a reciprocating motion and the cutting work piece is pressed against the wire at 0.3 mm/minute, and then machining is carried out with a tension of 35 N given to the wire tool while pouring a water-soluble abrasive slurry thereon.

After removing end materials from the cut out wafers, variation in wafer thickness, TTV, warps, surface roughness Ra, and so on are measured. The variation in wafer thickness is calculated by calculating an average of thicknesses at five points - one at the center and four on the circumference thereof - of each wafer and calculating a standard deviation of the wafer thickness variation of all the wafers except for the end materials.

Also, TTV follows an article 3.7.4 TV5 of QIAJ-B-007, which is a technical measure specified in Quartz Crystal Industry Association of Japan. That is, TTV represents a degree of parallelism between front and back surfaces after cutting.

FIG. 6 illustrates a method for measuring TTV (TV5). Wafer center lines L and M are vertical to an orientation flat (J in the drawing) and a secondary flat (K in the drawing) of the obtained wafer, respectively. At this time, thickness is measured at total of five points: H1 to H4, which are intersecting points of an inner line 6mm inside an outer periphery of the wafer (I in the drawing) with the center lines L and M, and H5, which is the center of the wafer (an intersecting point of the center lines L and M). The difference between a maximum thickness and a minimum thickness measured here will be the measured value of TTV (TV5). If this value is 10 µm or less, it is considered as a pass. A pass rate (the number of passed wafers / the number of measured wafers) is evaluated.

Also, as for warps, a wafer surface of every five cutout wafers is scanned in a flatness measuring equipment to evaluate a difference between the maximum height and the minimum height and an average value thereof is calculated. Also, as for the surface roughness, similarly to warp, the surface roughness Ra of a surface in the cutting direction (a direction in which the wire tool cuts into) of every five cutout wafers is measured by a probe-type surface roughness measuring equipment and its average value is taken. Each of theses evaluation items are evaluated as "good" or "bad". The evaluation criteria are shown in Table 1 and the results of each evaluation are shown in Table 2.

**[Table 1]**

| Evaluation | Variation in Wafer Thickness | TTV Pass Rate | Warp um | Surface Roughness um |
|---|---|---|---|---|
| good | less than 4.0 | 90% or more | less than 20 | less than 0.40 |
| bad | 4.0 or more | less than 90% | 20 or more | 0.40 or more |

**[Table 2]**

| No. | Metal Coating Thickness um | Metal Coating Rate % | Metal Coating Form | Core-wire Plating Thickness um | Abrasive-grain Plating Thickness um | Abrasive-wire Plating Thickness / Core-wire Plating Thickness | Core-wire Plating Thickness / Abrasive-grain Diameter | Wire Diameter um | Variation in Wafer Thickness | | TTV Pass Rate | | Warp um | | Surface Roughness um | | Overall Judgement |
|---|---|---|---|---|---|---|---|---|---|---|---|---|---|---|---|---|---|
| 1 | 0.2 | 50% | Sea | 17 | 1.5 | 0.09 | 0.48 | 254.1 | 3.2 | good | 66% | bad | 24.6 | bad | 0.52 | bad | bad |
| 2 | 0.2 | 60% | Sea | 17 | 3.2 | 0.15 | 0.48 | 255.9 | 3.4 | good | 78% | bad | 23.1 | bad | 0.48 | bad | bad |
| 3 | 0.2 | 70% | Sea | 17 | 4.3 | 0.25 | 0.48 | 258.1 | 2.7 | good | 92% | good | 18.1 | good | 0.36 | good | good |
| 4 | 0.2 | 80% | Sea | 17 | 7.5 | 0.44 | 0.48 | 263.7 | 2.8 | good | 100% | good | 12.9 | good | 0.36 | good | good |
| 5 | 0.2 | 90% | Sea | 17 | 12.8 | 0.75 | 0.48 | 265.9 | 3.2 | good | 97% | good | 17.2 | good | 0.32 | good | good |
| 6 | 0.2 | 100% | Entirety | 17 | 17.2 | 1.01 | 0.48 | 272.8 | 4.8 | bad | 98% | good | 27.3 | bad | 0.33 | good | bad |
| 7 | 0.2 | 50% | Island | 17 | 0.0 | 0.00 | 0.48 | 252.9 | 3.6 | good | 52% | bad | 33.3 | bad | 0.58 | bad | bad |
| 8 | 0.2 | 60% | Island | 17 | 0.5 | 0.03 | 0.48 | 254.4 | 3.7 | good | 58% | bad | 30.5 | bad | 0.52 | bad | bad |
| 9 | 0.2 | 70% | Island | 17 | 1.8 | 0.11 | 0.48 | 256.9 | 2.9 | good | 62% | bad | 28.9 | bad | 0.49 | bad | bad |

"Overall Judgment" in Table 2 is given by evaluating four items of wafer thickness variation, TTV pass rate, warp, and surface roughness according to the criteria shown in Table 1. Here, it is preferable that a wire tool should be good in all of the four items above for the cutting ability, and if any one of these four items has a low evaluation, it is problematic in practice. Thus, the worst evaluation among every evaluation of every item is shown in the "Overall Judgment" column of Table 2 to Table 6.

In Table 2, the results of the evaluations for No. 3 to No. 5 are "good" since the palladium coating is in a sea form (the diamond exposed portions are in an island form) and the palladium coating ratio is between 70 % and 90 % so as to form a uniform plating on the abrasive grain surface.

However, the results of the evaluations for No.1 and No.2 are "bad" despite the fact that the palladium coating is in a sea form. This is because the palladium coating rate is low and is not between 70 % and 90 %. The result of the evaluations for No. 6 is also "bad" because the palladium coating covers the entire diamond surface with the 100 % palladium coating rate, which makes the plating thickness on the abrasive grain surface thicker.

This is because, if the palladium coating rate is less than 70 % as in No.1 and No.2, the plating on the abrasive grain becomes thin and adhesiveness with the abrasive grain is reduced. As a result, the abrasive grains may be likely to fall off and the concentration rate of the abrasive grains and the diameter of the wire tool may be likely to change with time. This results in a difference in the wafer thickness between the early stage and the final stage of cutting, and thus the overall wafer qualities are deteriorated.

Also, if the palladium coating rate is more than 90 % and palladium covers the abrasive grain surface completely (the palladium coating rate is 100 %) as in No. 6, the plating on the abrasive grains thickens and, although the abrasive grains are firmly fixed, the cutting ability of the wire tool at an early stage is deteriorated. As a result, variation in the wafer thickness increases due to sliding of the wire tool especially at the beginning of cutting and the cutting quality is also deteriorated. Consequently, in the present invention, the palladium coating rate is preferably between 70% and 90%.

In contrast, the palladium coating is not in a sea form but in a coating form of divided islands in No. 7 to No. 9 and thus a uniform plating is not formed on the abrasive grain surface and this caused lack in adhesiveness between the abrasive grains and the plating. As a result, the abrasive grains may be likely to fall off and diameter of the wire tool may be likely to change with time, and, also, since the plating thickness is not uniform, TTV and warp are deteriorated.

In particular, the result of the evaluation is "bad" in No.9 despite the fact that the palladium coating rate is 70%. This is because the abrasive grain is coated in an island form. From the above, in the present invention, by forming the palladium coating continuously in a sea form with the predetermined coating rate, it is possible to form the plating uniformly and stably on the abrasive grains to fix the abrasive grains firmly while suppressing the plating thickness on the abrasive grains so that the qualities of the cut wafers can be improved.

### (Working Example 2)

Next, using No. 4 in Working Example 1 as a benchmark, the thickness of the palladium coating on the abrasive grain is varied and the similar evaluations are carried out. The results are shown in Table 3. The parameters other than the thickness of the palladium coating are the same as in No. 4 in Working Example 1. Also, No. 4 in Working Example 1 and No. 16 in Working Example 2 are the same samples.

The palladium coating thickness can be varied appropriately by changing the temperature in the accelerator process. In specific, the abrasive grains the surface of which is formed with the palladium coating as islands are used and, by changing the processing temperature during the accelerator process, the coating thickness is adjusted from 0.002 µm to 0.8 µm (No. 11 to No.20).

**[Table 3]**

| No. | Metal Coating Thickness um | Metal Coating Rate % | Metal Coating Form | Core-wire Plating Thickness um | Abrasive-grain Plating Thickness um | Abrasive-wire Plating Thickness / Core-wire Plating Thickness | Core-wire Plating Thickness / Abrasive-grain Diameter | Wire Diameter um | Variation in Wafer Thickness | | TTV Pass Rate | | Warp um | | Surface Roughness um | | Overall Judgement |
|---|---|---|---|---|---|---|---|---|---|---|---|---|---|---|---|---|---|
| 11 | 0.002 | 80% | Sea | 17 | 1.1 | 0.06 | 0.48 | 253.1 | 2.9 | good | 64% | bad | 31.1 | bad | 0.51 | bad | bad |
| 12 | 0.005 | 80% | Sea | 17 | 2.9 | 0.17 | 0.48 | 255.9 | 3.1 | good | 72% | bad | 30.5 | bad | 0.45 | bad | bad |
| 13 | 0.01 | 80% | Sea | 17 | 3.8 | 0.22 | 0.48 | 260.1 | 2.5 | good | 94% | good | 18.8 | good | 0.39 | good | good |
| 14 | 0.05 | 80% | Sea | 17 | 4.8 | 0.28 | 0.48 | 260.9 | 2.7 | good | 95% | good | 17.4 | good | 0.32 | good | good |
| 15 | 0.1 | 80% | Sea | 17 | 5.0 | 0.29 | 0.48 | 262.0 | 2.7 | good | 99% | good | 18.1 | good | 0.33 | good | good |
| 16 | 0.2 | 80% | Sea | 17 | 7.5 | 0.44 | 0.48 | 263.7 | 2.8 | good | 100% | good | 12.9 | good | 0.36 | good | good |
| 17 | 0.3 | 80% | Sea | 17 | 10.2 | 0.60 | 0.48 | 263.3 | 2.6 | good | 98% | good | 15.1 | good | 0.29 | good | good |
| 19 | 0.4 | 80% | Sea | 17 | 12.1 | 0.71 | 0.48 | 267.1 | 3.1 | good | 100% | good | 16.9 | good | 0.31 | good | good |
| 18 | 0.5 | 80% | Sea | 17 | 13.5 | 0.79 | 0.48 | 267.2 | 3.3 | good | 97% | good | 19.1 | good | 0.36 | good | good |
| 19 | 0.6 | 80% | Sea | 17 | 16.9 | 0.99 | 0.48 | 274.5 | 4.4 | bad | 98% | good | 23.3 | bad | 0.29 | good | bad |
| 20 | 0.8 | 80% | Sea | 17 | 20.1 | 1.18 | 0.48 | 279.5 | 5.1 | bad | 98% | good | 27.5 | bad | 0.33 | good | bad |

From Table 3, the evaluations for No. 13 to No. 18, in which the palladium coating thickness is in a range of 0.01 µm and 0.5 µm and the abrasive-grain plating thickness / core-wire plating thickness is in a range of 0.2 and 0.8, are "good". On the other hand, when the palladium coating thickness is 0.6 µm or more as in No.19 and No.20, the evaluations are "bad". The reason for this is that, since the palladium coating is thick, although the abrasive grains are firmly fixed, the plating on the abrasive grains also becomes thick and, as a result, variation in the wafer thickness is increased due to sliding of the wire tool especially at the beginning of cutting.

Also, the evaluations are "bad" for No.11 and No.12 in which the palladium coating thickness is less than 0.01 µm. The reason for this is that, since the palladium coating is thin, the plating on the abrasive grain becomes thin and the adhesiveness between the abrasive grains and the plating is low. As a result, the abrasive grains may be likely to fall off, the diameter of the wire tool may be likely to change with time, and TTV and warp are deteriorated in particular. From the above, in the present invention, the palladium coating thickness on the abrasive grain is preferably between 0.01 µm and 0.5 µm.

### (Working Example 3)

Next, similar evaluations are carried out changing the plating thickness of the core wire part. The results are shown in Table 4. The parameters other than the plating thickness of the core wire part are the same as in No. 4 in Working Example 1. The plating thickness of the core wire part is adjusted by adjusting applied electric current and plating time.

**[Table 4]**

| No. | Metal Coating Thickness um | Metal Coating Rate % | Metal Coating Form | Core-wire Plating Thickness um | Abrasive-grain Plating Thickness um | Abrasive-wire Plating Thickness / Core-wire Plating Thickness | Core-wire Plating Thickness / Abrasive-grain Diameter | Wire Diameter um | Variation in Wafer Thickness | | TTV Pass Rate | | Warp um | | Surface Roughness um | | Overall Judgement |
|---|---|---|---|---|---|---|---|---|---|---|---|---|---|---|---|---|---|
| 21 | 0.2 | 80% | Sea | 7 | 3.9 | 0.56 | 0.20 | 254.1 | 3.5 | good | 68% | bad | 26.9 | bad | 0.45 | bad | bad |
| 22 | 0.2 | 80% | Sea | 10 | 7.4 | 0.74 | 0.28 | 259.2 | 3.1 | good | 95% | good | 13.1 | good | 0.39 | good | good |
| 23 | 0.2 | 80% | Sea | 15 | 12.1 | 0.81 | 0.42 | 263.1 | 3.1 | good | 99% | good | 15.5 | good | 0.33 | good | good |
| 24 | 0.2 | 80% | Sea | 21 | 13.5 | 0.64 | 0.59 | 265.9 | 3.5 | good | 98% | good | 16.8 | good | 0.31 | good | good |
| 25 | 0.2 | 80% | Sea | 26 | 15.5 | 0.60 | 0.73 | 269.2 | 3.8 | good | 96% | good | 16.3 | good | 0.37 | good | good |
| 26 | 0.2 | 80% | Sea | 28 | 15.6 | 0.56 | 0.79 | 275.1 | 4.6 | bad | 94% | good | 22.2 | bad | 0.34 | good | bad |

The evaluations for No. 22 to No. 25, in which the plating thickness of the core wire part is in a range of 10 µm and 26 µm and the core-wire plating thickness / abrasive-grain diameter is in a range of 0.25 and 0.75 (i.e. the core-wire plating thickness / abrasive-grain diameter is in a range of 0.25 and 0.75), are "good".

On the other hand, the evaluation for No. 21 in which the core-wire plating thickness / abrasive-grain diameter is 0.2 is "bad". This is because the plating thickness is too thin that the holding power for the abrasive grains is insufficient. As a result, the abrasive grains may be likely to fall off, the diameter of the wire tool may be likely to change with time, and, TTV and warp are deteriorated.

The evaluations for No. 26 in which the core-wire plating thickness / abrasive-grain diameter is more than 0.75 is also "bad". This is because the plating thickness is too thick that the variation in wafer thickness is increased. From the above, in the present invention, the core-wire plating thickness / abrasive-grain diameter is preferably between 0.25 and 0.75.

### (Working Example 4)

Next, using an abrasive diamond grain with an abrasive-grain diameter of 9.8 µm, the same evaluations as in Working Example 1 are carried out changing the palladium coating rate. The results are shown in Table 5. The core-wire part plating thickness is 6 µm. The palladium coating thickness is the same as that in Working Example 1. The experiments are carried out changing the cutting speed appropriately according to the sizes of the abrasive grains.

**[Table 5]**

| No. | Metal Coating Thickness um | Metal Coating Rate % | Metal Coating Form | Core-wire Plating Thickness um | Abrasive-grain Plating Thickness um | Abrasive-wire Plating Thickness / Core-wire Plating Thickness | Core-wire Plating Thickness / Abrasive-grain Diameter | Wire Diameter um | Variation in Wafer Thickness | | TTV Pass Rate | | Warp um | | Surface Roughness um | | Overall Judgement |
|---|---|---|---|---|---|---|---|---|---|---|---|---|---|---|---|---|---|
| 31 | 0.2 | 80% | Sea | 6 | 4.2 | 0.70 | 0.59 | 218.5 | 2.9 | good | 98% | good | 15.11 | good | 0.21 | good | good |
| 32 | 0.2 | 70% | Sea | 6 | 2.7 | 0.45 | 0.59 | 216.6 | 3.1 | good | 92% | good | 19.2 | good | 0.23 | good | good |
| 33 | 0.2 | 60% | Sea | 6 | 1.4 | 0.18 | 0.59 | 213.3 | 3.1 | good | 81% | bad | 25.1 | bad | 0.24 | good | bad |
| 34 | 0.2 | 50% | Sea | 6 | 0.7 | 0.08 | 0.59 | 211.9 | 3.1 | good | 69% | bad | 29.3 | bad | 0.25 | good | bad |
| 35 | 0.2 | 100% | Entirety | 6 | 5.8 | 0.97 | 0.59 | 226.4 | 4.3 | bad | 94% | good | 20.3 | bad | 0.35 | good | bad |
| 36 | 0.2 | 70% | Island | 6 | 0.8 | 0.13 | 0.59 | 215.1 | 3.8 | good | 72% | bad | 24.7 | bad | 0.35 | good | bad |

As shown in Table 5, in No.31 and No.32, since the palladium coating is in a sea form (the diamond exposed portions are islands) and the palladium coating rate is in a range of 70% and 90%, the uniform plating is also formed on the abrasive grain surface. As a result, the results of the evaluations are "good".

On the other hand, in No.33 and No.34, although the palladium coating is in a sea form, the palladium coating rate is low as 50% to 60% so the abrasive-grain plating thickness is thin, the adhesiveness with the abrasive grains is low, and the abrasive grains may be likely to fall off. Thus, the diameter of the wire tool may be likely to change with time, and, TTV and warp are deteriorated. As a result, the results of the evaluations are "bad".

Also, in No. 35, since the palladium coating completely covers the diamond surface with the palladium coating rate of 100%, the plating on the abrasive grain is too thick. For this reason, the cutting ability of the wire tool at the beginning is deteriorated and variation in the wafer thickness is increased. As a result, the result of the evaluation is "bad".

Also, in No. 36, although the palladium coating rate is 70%, the palladium coating is not in a sea form but coatings are separated as islands and thus the uniform plating is not formed on the abrasive grain and the adhesiveness between the abrasive grains and the plating is insufficient. As a result, the abrasive grains may be likely to fall off, the diameter of the wire tool may be likely to change with time, and TTV and warp are deteriorated.

### (Working Example 5)

Next, using an abrasive diamond grain with an abrasive-grain diameter of 58.7 µm, the same evaluations as in Working Example 4 are carried out changing the palladium coating rate. The results are shown in Table 6. The core-wire part plating thickness is 30 µm. The palladium coating thickness is the same as that in Working Example 1. The experiments are carried out changing the cutting speed appropriately according to the sizes of the abrasive grains.

**[Table 6]**

| No. | Metal Coating Thickness um | Metal Coating Rate % | Metal Coating Form | Core-wire Plating Thickness um | Abrasive-grain Plating Thickness um | Abrasive-wire Plating Thickness / Core-wire Plating Thickness | Core-wire Plating Thickness / Abrasive-grain Diameter | Wire Diameter um | Variation in Wafer Thickness | | TTV Pass Rate | | Warp um | | Surface Roughness um | | Overall Judgement |
|---|---|---|---|---|---|---|---|---|---|---|---|---|---|---|---|---|---|
| 41 | 0.2 | 80% | Sea | 30 | 19.9 | 0.66 | 0.51 | 314.1 | 3.3 | good | 93% | good | 18.8 | good | 0.38 | good | good |
| 42 | 0.2 | 70% | Sea | 30 | 14.2 | 0.47 | 0.51 | 311.0 | 3.4 | good | 90% | good | 15.2 | good | 0.35 | good | good |
| 43 | 0.2 | 60% | Sea | 30 | 5.5 | 0.18 | 0.51 | 308.8 | 3.6 | good | 79% | bad | 22.1 | bad | 0.46 | bad | bad |
| 44 | 0.2 | 50% | Sea | 30 | 2.2 | 0.07 | 0.51 | 305.1 | 3.8 | good | 71% | bad | 24.9 | bad | 0.51 | bad | bad |
| 45 | 0.2 | 100% | Entirety | 30 | 31.1 | 1.04 | 0.51 | 320.1 | 4.8 | bad | 94% | good | 19.2 | good | 0.45 | bad | bad |
| 46 | 0.2 | 70% | Island | 30 | 1.5 | 0.05 | 0.51 | 302.9 | 3.5 | good | 72% | bad | 26.6 | bad | 0.55 | bad | bad |

As shown in Table 6, in No.41 and No42, since the palladium coating is in a sea form (the diamond exposed portions are islands) and the palladium coating rate is in a range of 70% and 90%, the uniform plating is also formed on the abrasive grain surface. As a result, the results of the evaluations are "good".

On the other hand, in No.43 and No.44, although the palladium coating is in a sea form, the palladium coating rate is low as 50% to 60% so the adhesiveness with the abrasive grains is low, and the abrasive grains may be slightly likely to fall off. Thus, the diameter of the wire tool may be likely to change with time, and, TTV and warp are deteriorated. As a result, the results of the evaluations are "bad".

Also, in No. 45, since the palladium coating completely covers the diamond surface with the palladium coating rate of 100%, the plating on the abrasive grain is too thick. For this reason, the cutting ability of the wire tool at the beginning is deteriorated and variation in the wafer thickness is increased. As a result, the result of the evaluation is "bad".

Also, in No. 46, although the palladium coating rate is 70%, the palladium coating is not in a sea form but coatings are separated as islands and thus the uniform plating is not formed on the abrasive grain and the adhesiveness between the abrasive grains and the plating is insufficient. As a result, the abrasive grains may be likely to fall off, the diameter of the wire tool may be likely to change with time, and TTV and warp are deteriorated.

Thus, by using palladium as the metal for coating the abrasive grain surface and limiting the coating form thereof in addition to the coating rate and the coating thickness thereof, the plating thickness on the abrasive grain with respect to the plating thickness on the core wire can be within an appropriate range regardless of the size of the abrasive grain. This can make the wire tool demonstrate sharpness from the beginning with firmly fixed abrasive grains and meet all the wafer qualities.

Although the embodiments of the present invention have been described referring to the attached drawings, the technical scope of the present invention is not limited to the embodiments described above. It is obvious that persons skilled in the art can think out various examples of changes or modifications within the scope of the technical idea disclosed in the claims, and it will be understood that they naturally belong to the technical scope of the present invention.

### DESCRIPTION OF NOTATIONS

1 . cutting device
3 . ingot
5 . holder
7 . wire tool
9 . roller
11 . core wire
13 . abrasive grain
14 . diamond grain
15 . plating layer
15a core-wire plating layer
15b abrasive-grain plating layer
17 . palladium coating
18 . diamond exposed portion
20 . wire-tool manufacturing device
21 . degreasing tank
23 . water-washing tank
25 . plating tank
27 . water-washing tank
29 . cathode
31 . anode
33 . winding-up device

## Claims

1. An abrasive diamond grain for wire tools, the abrasive diamond grain being a diamond grain a part of a surface of which is coated with palladium, wherein:
a sea portion, which is approximately continuously coated with palladium with a coating thickness of between 0.01 µm and 0.5 µm on the surface of the diamond grain, and an exposed portion, which is not coated with palladium and exposes the surface of the diamond grain, are formed: and
an area ratio of the sea portion to a surface area of the diamond grain is between 70% and 90% and a remaining part is the exposed portion.

2. A wire tool comprising:
the abrasive diamond grains according to claim 1;
a core wire having electric conductivity; and
a plating layer for holding the abrasive diamond grain, the plating layer being formed on an outer periphery of the core wire, wherein:
the plating layer includes a core-wire plating layer covering a surface of the core wire and an abrasive-grain plating layer covering a surface of the abrasive diamond grain; and
a ratio of an average thickness of the abrasive-grain plating layer on the surface of the abrasive diamond grain of a part protruding from the core-wire plating layer to an average thickness of the core-wire plating layer is between 0.2 and 0.8.

3. A wire tool comprising:
the abrasive diamond grains according to claim 1;
a core wire having electric conductivity; and
a plating layer for holding the abrasive diamond grain, the plating layer being formed on an outer periphery of the core wire, wherein:
the plating layer includes a core-wire plating layer covering a surface of the core wire and an abrasive-grain plating layer covering a surface of the abrasive diamond grain; and
a part of the abrasive-grain plating layer at a tip end of the abrasive diamond grain is removed and a part of the tip end of at least some of the abrasive diamond grains is exposed.

4. The wire tool according to claim 2 or claim 3 wherein:
the average thickness of the core-wire plating layer is between 0.25 and 0.75 times an average grain diameter of the abrasive diamond grains.

5. The wire tool according to claim 2 or claim 3 wherein:
the surface of the core wire includes a strike plating layer.
